# EUROPEAN PATENT APPLICATION

(11) **EP 3 603 965 A1**
(43) Date of publication of application: **05.02.2020**
(21) Application number: 18775242.3
(22) Date of filing: 29.03.2018
(51) Int. Cl.: B32B 27/18, B32B 27/00, B32B 27/32, B65D 81/26

(54) **OXYGEN ABSORPTIVE FILM, PACKAGING LAMINATED BODY AND PACKAGING BODY USING OXYGEN ABSORPTIVE FILM, AND METHOD FOR PROCESSING CONTENTS USING PACKAGING BODY**

(30) Priority: 29.03.2017 JP 2017064996
(71) Applicant: Kyodo Printing Co., Ltd., Tokyo 112-8501 (JP)
(72) Inventor: YASUDA, Atsushi, Tokyo 112-8501 (JP); NARITA, Yuki, Tokyo 112-8501 (JP); INOUE, Masa, Tokyo 112-8501 (JP)
(74) Representative: Krauns, Christian
(86) International application number: PCT/JP2018/013395
(87) International publication number: WO 2018/181793

(57) **Abstract**

An oxygen absorptive film 10a of the present invention is an oxygen absorptive film provided with an oxygen absorption layer 2 and a skin layer 4 laminated on at least one surface of the oxygen absorption layer, wherein the oxygen absorption layer contains polyolefin and cerium oxide having oxygen deficiency, and wherein the skin layer contains an acyclic olefin-based polymer and a cyclic olefin-based polymer.

## Description

### FIELD

The present invention relates to an oxygen-absorbing film, a package and a laminate for packaging using the oxygen-absorbing film, and a method for processing a content using the package.

### BACKGROUND OF THE INVENTION

Oxygen-absorbing films are used in the packing materials for food products, drugs, pharmaceuticals, cosmetics, electronic parts, etc., so that quality of the content is not degraded due to oxidation by oxygen inside the package. Oxygen-absorbing films using oxygen-deficient cerium oxide has been proposed.

Patent document 1 discloses an oxygen-absorbing film which comprises an oxygen-absorbing layer and resin layers positioned on both surfaces of the oxygen-absorbing layer, and contains the above oxygen-deficient cerium oxide in the range of more than 50 weight% and less than 85 weight% in the oxygen-absorbing layer.

Depending on the content of the package, it could be necessary to perform radiation sterilization treatment such as gamma ray sterilization after packaging. In particular, gamma ray sterilization is a method that achieves excellent sterilization in the presence of oxygen.

However, in certain fields, particularly the field of medical instruments, it is not favorable for oxygen to be present in the packaging materials. For example, if oxygen is present in the packaging material of a cellulose acetate hollow fiber membrane used in an artificial dialyzer, aldehydes such as acetaldehyde and formaldehyde, etc., are generated by oxidation of the acetate composing the membrane, whereby a disadvantageous effect may occur in a patient who is the user. Additionally, plastic, which is a primary material in artificial dialyzers, might oxidize over time due to oxygen and thereby its strength might decrease.

In order to solve the above problems, Patent document 2 proposes a method of sterilization of a medical instrument package comprising: a step of storing a medical instrument and oxygen absorber in an oxygen impermeable packaging material to make a package; a step of performing radiation sterilization of the package while maintaining an oxygen concentration which has been reduced to some extent in the atmosphere within the package using an oxygen absorber; and a step of further reducing the oxygen concentration with oxygen absorber while maintaining a sterilized condition of the package after radiation sterilization.

### [CITATION LIST]

### [PATENT LITERATURE]

[Patent document 1] JP 2012-158125
[Patent document 2] WO 98/58842

### SUMMARY OF THE INVENTION

### [PROBLEM TO BE SOLVED BY THE INVENTION]

According to the method of Patent document 2, generation of harmful side products can be limited by somewhat decreasing the oxygen atmosphere during sterilization while maintaining the efficacy of sterilization due to radiation sterilization, and further reducing oxygen concentration while in storage thereafter.

However, when enclosing oxygen absorber in the package, the oxygen absorber may spill out upon opening of the package or the user may forget to put the oxygen absorber in the package. Additionally, unevenness in oxygen concentration occurs between the space around the oxygen absorber and other spaces, and therefore may result in uneven sterilization.

Therefore, there is a need to provide an oxygen-absorbing film that can suitably control the rate of oxygen absorption.

### [MEANS FOR SOLVING THE PROBLEM]

As a result of keen evaluation, the present inventors discovered that the problems could be solved by the following means, and completed the present invention. Essentially, the present invention is as follows:
<1> An oxygen-absorbing film comprising an oxygen-absorbing layer and a skin layer laminated on at least one surface of the oxygen-absorbing layer,
   wherein the oxygen absorbing layer comprises a polyolefin, and oxygen-deficient cerium oxide, and
   wherein the skin layer comprises an acyclic olefin polymer and a cyclic olefin polymer.
<2> The oxygen-absorbing film according to <1> above, wherein the content of the cyclic olefin polymer in the skin layer is 10 to 90 mass% relative to the total mass of the entire skin layer.
<3> The oxygen-absorbing film according to <2> above, wherein the content of the cyclic olefin polymer in the skin layer is 10 to 40 mass% relative to the total mass of the entire skin layer.
<4> The oxygen-absorbing film according to any one of <1> to <3> above, wherein the cyclic olefin polymer is an α-olefin-cyclic olefin copolymer.
<5> The oxygen-absorbing film according to any one of <1> to <4> above, wherein the skin layer is directly laminated on the oxygen-absorbing layer.
<6> The oxygen-absorbing film according to any one of <1> to <5> above, wherein the oxygen permeability of a thermoplastic resin composing the skin layer, measured in accordance with JIS K 7126-2, is 1000 to 6500 cc·20 µm/m²·day·atm.
<7> A laminate for packaging comprising
   a substrate layer, and
   the oxygen-absorbing film according to any one of <1> to <6> above laminated on the substrate layer,
   wherein the skin layer of the oxygen-absorbing film is positioned on the opposite side from the substrate layer.
<8> A package comprising
   the laminate for packaging according to <7> above, and
   a content sealed by the laminate for packaging,
   wherein the skin layer of the laminate for packaging is positioned on the side with the content.
<9> A package, comprising
   a laminate for packaging comprising a substrate layer, an oxygen-absorbing layer, and a skin layer in that order, and
   a content sealed by the laminate for packaging,
   wherein the skin layer of the laminate for packaging is positioned on the side with the content,
   wherein the oxygen-absorbing layer comprises a polyolefin and an oxygen-deficient cerium oxide, and
   wherein the oxygen permeability of a thermoplastic resin constituting the skin layer, measured in accordance with JIS K 7126-2, is 1000 to 6500 cc·20 µm/m²·day·atm.
<10> A package, comprising
   a laminate for packaging, comprising a substrate layer, an oxygen-absorbing layer, and a skin layer in that order, and
   a content sealed by the laminate for packaging,
   wherein the skin layer of the laminate for packaging is positioned on the side with the content,
   wherein the oxygen-absorbing layer comprises a polyolefin and oxygen-deficient cerium oxide, and
   wherein the skin layer comprises an acyclic olefin polymer and a barrier resin such that, at 25 °C, the oxygen concentration inside the package is 0.7 to 5.0 vol% for at least 24 hours within 7 days after the sealing of the content, and is 0.2 vol% or less after 7 days from the sealing of the content.
<11> The packages according to any one of <8> to <10> above, further comprising
   a moisture-absorbing laminate, comprising a substrate layer, a moisture absorption layer, and a skin layer for moisture-absorbing laminate in this order,
   wherein a peripheral edge of the laminate for packaging and the peripheral edge of the moisture-absorbing laminate are facing each other and fused together, thereby sealing the content.
<12> The package according to <11> above, wherein at least one of the laminate for packaging and the moisture-absorbing laminate further comprises a sealant layer on the side with the content.
<13> The package according to any one of <8> to <12> above, wherein the content is a medical instrument.
<14> A method for processing the content, in which radiation sterilization treatment is performed on the package according to any one of <8> to <13> above.
<15> The method for processing the content according to <14> above, wherein the radiation sterilization treatment is performed within the period of 1 to 7 days after sealing.

### [EFFECTS OF INVENTION]

According to the present invention, it is possible to provide an oxygen-absorbing film that can suitably control the rate of oxygen absorption.

### BRIEF DESCRIPTION OF DRAWINGS

FIG. 1 shows the layer configuration of the oxygen-absorbing film of the present invention.
FIG. 2 shows the layer configuration of the laminate for packaging of the present invention.
FIG. 3 is a schematic diagram showing the package and the method for processing a content using the same of the present invention.

### DESCRIPTION OF THE EMBODIMENTS

### <Oxygen-absorbing film>

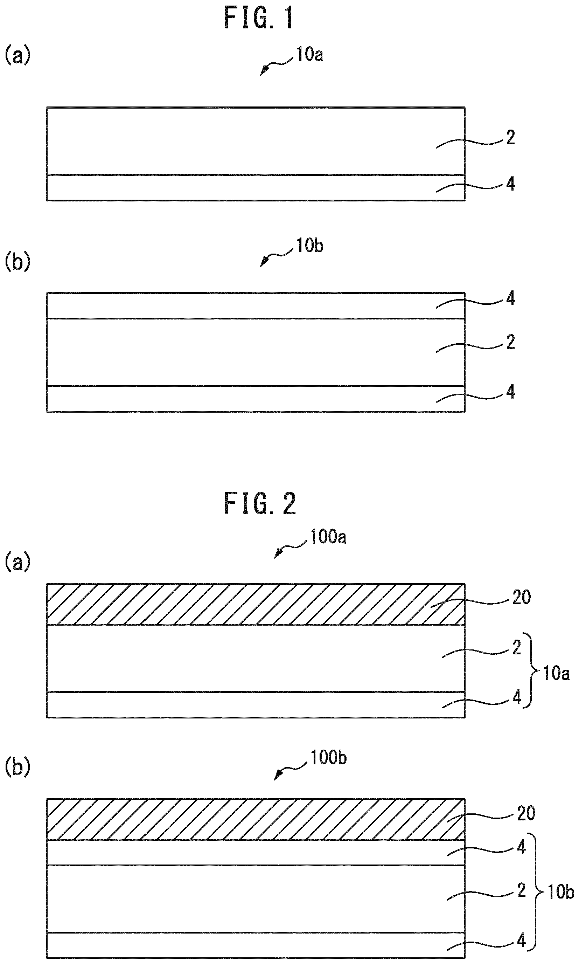

As shown in FIGS. 1 (a) and (b), the oxygen-absorbing film (10a, 10b) of the present invention comprises an oxygen-absorbing layer (2), and a skin layer (4) laminated on at least one surface of the oxygen-absorbing layer (2). The oxygen-absorbing layer comprises a polyolefin, and oxygen-deficient cerium oxide.

The oxygen permeability of the skin layer in the oxygen-absorbing film of the present invention, measured in accordance with JIS K 7126-2, can be 1000 to 6500 cc·20 µm/m²·day·atm.

The skin layer satisfying the above oxygen permeability can comprise an acyclic olefin polymer, and a barrier resin. Additionally, as the barrier resin, the use of a cyclic olefin polymer in particular is preferable from the perspective of good compatibility with acyclic olefin polymers, and resulting not localized oxygen-absorbing region.

In particular, when using an oxygen-absorbing film of the present invention in the constituent of a package, it is possible to limit edge face deactivation, which is deactivation when oxygen-deficient cerium oxide absorbs oxygen from the edge face of the oxygen-absorbing film, by the presence of the above skin layer.

It is preferable that the skin layer be directly laminated on the oxygen-absorbing layer, from the perspective of advantageously limiting oxygen absorbability of the oxygen-absorbing film, and the perspective of limiting edge face deactivation.

Each of the constituent elements of the present invention will be explained below.

### <Oxygen-absorbing layer>

The oxygen-absorbing layer comprises a polyolefin and oxygen-deficient cerium oxide. The oxygen-deficient cerium oxide can be dispersed in the polyolefin.

The content of oxygen-deficient cerium oxide in the oxygen-absorbing layer can be, based on the mass of the oxygen-absorbing layer, 1 mass% or more, 5 mass% or more, 10 mass% or more, or 20 mass% or more, and can be 70 mass% or less, 65 mass% or less, 57 mass% or less, 50 mass% or less, 45 mass% or less, or 40 mass% or less.

The thickness of the oxygen-absorbing layer can be 10 µm or more, 20 µm or more, or 30 µm or more, and 300 µm or less, 200 µm or less, 100 µm or less, 80 µm or less, or 50 µm or less.

### {Polyolefin}

The polyolefin can be a cyclic olefin polymer, or an acyclic olefin polymer.

The cyclic olefin polymer is a polymer having a cyclic olefin portion. A more specific description follows in regards to the skin layer.

The acyclic olefin polymer is a polymer which lacks a cyclic olefin portion. The acyclic olefin polymer can be a polyethylene resin or a polypropylene resin lacking a cyclic olefin portion.

In the present specification, "polyethylene resin" refers to a resin comprising 30 mol% or more, 40 mol% or more, 50 mol% or more, 60 mol% or more, 70 mol% or more, or 80 mol% or more of repeating units of ethylene groups in a main polymer chain thereof. The polyethylene resin can be selected from the group consisting of, for example, low density polyethylene (LDPE), linear low density polyethylene (LLDPE), medium density polyethylene (MDPE), high density polyethylene (HDPE), ethylene-acrylic acid copolymer (EAA), ethylene-methacrylic acid copolymer (EMAA), ethylene-ethyl acrylate copolymer (EEA), ethylene-methyl acrylate copolymer (EMA), ethylene vinyl acetate copolymer (EVA), carboxylic acid modified polyethylene, carboxylic acid modified ethylene vinyl acetate copolymer, and any derivative thereof, and any mixture thereof.

In the present specification, "polypropylene resin" refers to a resin comprising 30 mol% or more, 40 mol% or more, 50 mol% or more, 60 mol% or more, 70 mol% or more, or 80 mol% or more of repeating units of propylene groups in a main polymer chain. The polypropylene resin can be, for example, propylene (PP) homopolymer, random propylene (random PP), block polypropylene (block PP), chlorinated polypropylene, carboxylic acid-modified polypropylene, or any derivative thereof, or any mixture thereof.

### {Oxygen-deficient cerium oxide}

The oxygen-deficient cerium oxide can be dispersed in the polyolefin.

The oxygen deficiency of the cerium oxide is brought about by reductive treatment under a strongly reductive atmosphere, in which oxygen is forcefully removed from the cerium oxide crystal lattice to result in a condition of oxygen deficiency (CeO₂₋ₓ, 0 < x < 2) as shown in Formula (1) below. The reductive treatment can be performed in a reductive atmosphere of, for example, hydrogen gas, and using heat treatment, etc., at high temperatures such as 1000 °C.

CeO₂ + xH₂ → CeO₂₋ₓ + xH₂O (1)

Additionally, as shown in Formula (2) below, the portion in which oxygen is deficient serves as an inorganic oxygen absorber by reacting with oxygen.

CeO₂₋ₓ + (x/2) O₂ → CeO₂ (2)

The value of x above can be a positive value 1.0 or less, or preferably a positive value 0.7 or less. As shown in Formula (2) above, the presence of water in the atmosphere is not necessary for the cerium oxide to react with oxygen. Therefore, using oxygen-deficient cerium oxide as an inorganic oxygen absorber is particularly effective for a moisture-sensitive content.

### <Skin layer>

The skin layer is a layer laminated on at least one surface of the oxygen-absorbing layer. In particular, the skin layer of the present invention can be composed of a thermoplastic resin.

The oxygen permeability of the thermoplastic resin constituting the skin layer in the oxygen-absorbing film of the present invention, measured in accordance with JIS K 7126-2, can be from 1000 to 6500 cc·20 µm/m²·day·atm. The oxygen permeability can be 1500 cc·20 µm/m²·day·atm or more, 1800 cc·20 µm/m²·day·atm or more, 2000 cc·20 µm/m²·day·atm or more, 2500 cc·20 µm/m²·day·atm or more, or 3000 cc·20 µm/m²·day·atm or more, and 6300 cc·20 µm/m²·day·atm or less, 6000 cc·20 µm/m²·day·atm or less, 5500 cc·20 µm/m²·day·atm or less, 5000 cc·20 µm/m²·day·atm, or 4500 cc·20 µm/m²·day·atm or less.

The thermoplastic resin constituting the skin layer which satisfies the above oxygen permeability can comprise an acyclic olefin polymer or a barrier resin. The barrier resin can be an ethylene-based unsaturated polymer such as ethylene vinyl alcohol copolymer (EVOH), polyvinylidene chloride (PVDC), polychlorotrifluoroethylene, polyacrylonitrile (PAN), or cyclic olefin polymer.

As the barrier resin, the use of a cyclic olefin polymer in particular is preferable from the perspective of good compatibility with acyclic olefin polymers, and a resulting not localized oxygen-absorbing region.

As the content of barrier resin, based on the mass of the skin layer, 10 mass% or more, 20 mass% or more, or 30 mass% or more is preferable from the perspective of achieving oxygen permeability, and 90 mass% or less, 80 mass% or less, 70 mass% or less, 60 mass% or less, 50 mass% or less, or 40 mass% or less is preferable from the perspective of achieving good film formation of the skin layer.

The thickness of the skin layer can be 1 µm or more, 3 µm or more, 5 µm or more, 7 µm or more, or 10 µm or more, and 300 µm or less, 200 µm or less, 100 µm or less, 80 µm or less, 50 µm or less, 40 µm or less, 30 µm or less, 20 µm or less, or 15 µm or less. When skin layers are laminated on both surfaces of the oxygen-absorbing layer, the thicknesses thereof may be the same or different.

### {Acyclic olefin polymer}

The acyclic olefin polymer can be any of the acyclic olefin polymers indicated for the oxygen-absorbing layer.

### {Cyclic olefin polymer}

The cyclic olefin polymer is a polymer having a cyclic olefin portion, and can be a cyclic olefin polymer and/or an α-olefin-cyclic olefin copolymer.

### (Cyclic olefin polymer)

In the present invention, the monomer constituting the cyclic olefin polymer (COP) can be, for example, a vinyl cycloalkane such as vinyl cyclopropane, vinyl cyclobutene, vinyl cyclopentane, vinyl cyclohexane, or a derivative thereof; a monocycloalkene such as cyclopropene, cyclobutene, cyclopentene, cyclohexene, cycloheptene, cyclooctene, cyclooctene, or a derivative thereof; a polycyclic alkene such as bicyclo[2.2.1]hept-2-ene (norbornene), tricyclo[4.3.0.1^{2,5}]dec-3-ene, tetracyclo[4.4.0.1^{2,5}.1^{7,10}]dodec-3-ene, pentacyclo[6.5.1.1^{3,6}.0^{2,7}.0^{9,13}]pentadec-4-ene, pentacyclo[7.4.0.1^{2,5}.1^{9,12}.0^{8,13}]pentadec-3-ene, pentacyclo [8.4.0.1^{2,5}.1^{9,12}.0^{8,13}]hexadec-3-ene, pentacyclo [6.6.1.1^{3,6}.0^{2,7}.0^{9,14}]hexadeca-4-ene, or a derivative thereof; or any combination thereof.

### (α-olefin-cyclic olefin copolymer)

In the present invention, "α-olefin-cyclic olefin copolymer (COC)" refers to a copolymer of an α-olefin portion and a cyclic olefin portion.

In the present invention, "copolymer" refers to a copolymer consisting of two or more monomers.

The α-olefin portion can be, for example, ethylene, propylene, 1-butene, 1-pentene, 4-methyl-pentene, 3-methyl-pentene, 1-hexene, 1-heptene, 1-octene, 1-nonene, or 1-decene, or any combination thereof.

The cyclic olefin portion can be any of the monomers indicated for the cyclic olefin polymer.

Within the olefin-cyclic olefin copolymer, the structural units deriving from the α-olefin portion can be 10 mol% or more, 20 mol% or more, 30 mol% or more, 40 mol% or more, or 50 mol% or more, and 95 mol% or less, 90 mol% or less, 80 mol% or less, 70 mol% or less, or 60 mol% or less.

### <<Laminate for packaging >>

As shown in FIGS. 2 (a) and (b), the laminate for packaging (100a, 100b) of the present invention comprises a substrate layer (20), and the oxygen-absorbing film (10a, 10b) of the present invention laminated on the substrate layer (20). The skin layer of the oxygen-absorbing film is positioned on the opposite side from the substrate layer.

Lamination of the substrate layer and the oxygen-absorbing film can be performed by heat sealing, or through the use of an adhesive layer. The adhesive layer can be, for example, a dry laminating adhesive, a hot melt adhesive, a water soluble adhesive, an emulsion adhesive, or a thermoplastic resin for extrusion laminating.

### <Substrate layer>

The substrate layer is the substrate layer on which the oxygen-absorbing film of the present invention is laminated in the package. It is preferable for the substrate layer to impart the oxygen-absorbing film with sufficient rigidity and a barrier property to prevent the intrusion of water, oxygen and the like from the outside. The substrate layer can be, for example, a resin layer, a barrier layer, or a laminate comprising the resin layer and the barrier layer.

### {Resin layer}

The resin layer can be a thermoplastic resin with excellent impact-resistance and wear-resistance, such as, for example, polyolefin, vinyl-based polymers, polyester, polyamide, either independently or in combinations of 2 or more to form multiple layers. The resin layer can be a stretched film or a non-stretched film.

The polyolefin can be any of the polyolefins indicated for the oxygen-absorbing layer.

The vinyl-based polymer can be, for example, polyvinyl chloride (PVC), polystyrene, polyvinylidene chloride (PVDC), polychlorotrifluoro ethylene, or polyacrylonitrile (PAN).

The polyester can be, for example, polyethylene terephthalate (PET), or polybutylene terephthalate.

The polyamide can be, for example, a nylon such as nylon® 6, or nylon MXD 6.

The thickness of the resin layer can be 3 µm or more, 5 µm or more, 7 µm or more, 10 µm or more, or 12 µm or more, and 120 µm or less, 100 µm or less, 80 µm or less, 60 µm or less, 50 µm or less, 40 µm or less, 30 µm or less, or 20 µm or less.

### {Barrier layer}

A material that can restrict the permeation of oxygen from the outside into the oxygen-absorbing layer can be used as the barrier layer. If the resin layer has sufficient water vapor barrier properties and gas barrier properties, a barrier layer is not necessary, but if the resin layer does not have sufficient barrier properties, it is preferable to provide a barrier layer. Though not limited hereto, the barrier layer can be, for example, a metal foil such as an aluminum or aluminum alloy foil, an inorganic vapor deposition film such as an aluminum deposition film, a silica deposition film, an alumina deposition film, or a silica-alumina binary deposition film, or an organic coating film such as a polyvinylidene chloride coating film or a polyvinylidene fluoride coating film.

The thickness of the barrier layer can be 1 µm or more, 3 µm or more, 5 µm or more, or 7 µm or more, and 70 µm or less, 60 µm or less, 50 µm or less, 40 µm or less, 30 µm or less, 20 µm or less, or 10 µm or less.

### <<Package>>

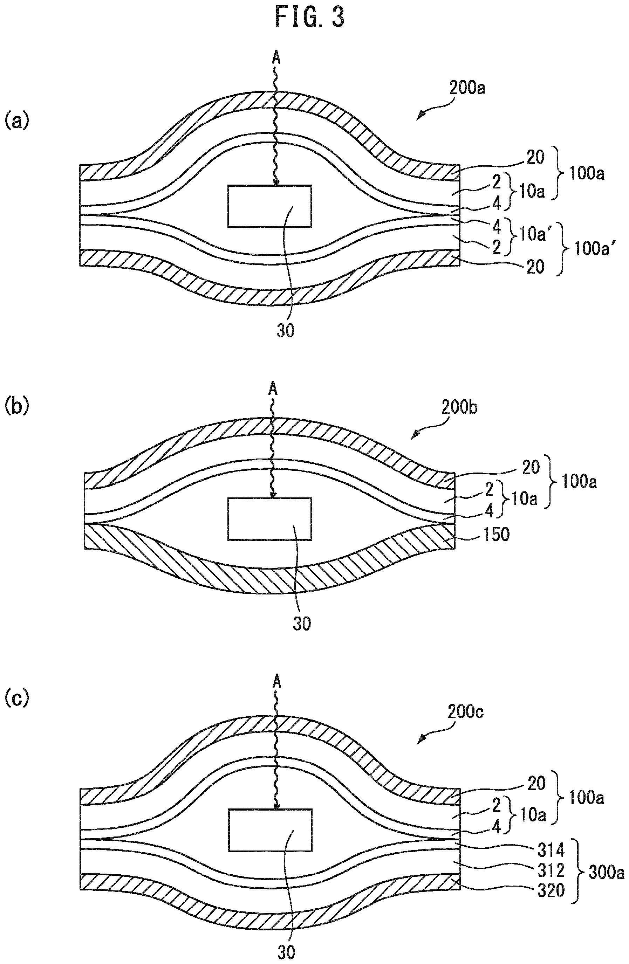

As shown in FIG. 3 (a), the package (200a) of the present invention comprises the laminate for packaging (100a, 100a') of the present invention and a content (30) sealed in the laminate for packaging (100a, 100a'), and the skin layer of the laminate for packaging is positioned on the side with the content.

Additionally, as shown in FIG. 3 (b), the content (30) can be sealed by the laminate for packaging (100a) of the present application and another film (150). The other film (150) can be, for example, composed of each of the layers composing the substrate layer.

In place of the other film (150) shown in FIG. 3 (b), a moisture-absorbing laminate can be used. Basically, as shown in FIG. 3 (c), the package (200c) of the present invention comprises a substrate layer (320), a moisture-absorbing layer (312), and a skin layer for moisture-absorbing laminate (314) in that order, and can further comprise a moisture-absorbing laminate. In the package (200c), the peripheral edge of the laminate for packaging (100a) and the peripheral edge of the moisture-absorbing laminate (300a) are facing each other and fused together, thereby sealing the content (30).

Additionally, in this embodiment, at least one of the laminate for packaging and the moisture-absorbing laminate can further comprise a sealant layer on the side with the content.

By virtue of the package of the present invention, the oxygen concentration inside the package at 25 °C for at least 24 hours within 7 days after sealing the content can be 0.7 vol% or more, 1.0 vol% or more, or 1.5 vol% or more, and 5.0 vol% or less, 4.0 vol% or less, 3.0 vol% or less, or 2.5 vol% or less. The oxygen concentration 7 days after sealing the content can be 0.20 vol% or less, 0.15 vol% or less, or 0.10 vol% or less.

The present inventors have further discovered that the package of the embodiment of the present invention shown in FIG. 3 (c) can limit deactivation from the edge faces of the oxygen-absorbing layer and the moisture-absorbing layer. Without being bound by theory, it is believed that due to the presence of a barrier resin contained in the skin layer of the laminate for packaging, permeation of oxygen through the oxygen-absorbing layer can be restricted, and additionally, permeation of moisture through the skin layer can be restricted, whereby permeation of moisture from the skin layer to the skin layer for moisture-absorbing laminate can be restricted, and as a result, the moisture absorption path is narrowed.

### <Content>

The content can be any product which can deteriorate due to contact with external air, and is not particularly limited. The content can be drugs, food products, medical instruments, medical tools, electronic parts, precision machines, or recording materials, etc.

In particular, if the content is content to which radiation sterilization treatment after sealing is subject, for example, medical instruments, the present invention is more favorable, as it can greatly reduce the oxygen concentration 7 days after sealing while maintaining the proper oxygen concentration during the time when radiation sterilization treatment is being performed. Medical instruments include, for example, scalpels, tweezers, syringes, thermometers, and artificial dialyzers.

### <Moisture-absorbing laminate>

The moisture-absorbing laminate can be comprised of a substrate layer, a moisture-absorbing layer, and a skin layer for a moisture-absorbing layer laminate, in that order.

### (Moisture-absorbing layer)

The moisture-absorbing layer can comprise a thermoplastic resin and a moisture absorbent. The moisture absorbent can be dispersed in the thermoplastic resin.

### (Moisture-absorbing layer: moisture absorbent)

The moisture absorbent can be, for example, a physical moisture absorbent, or a chemical moisture absorbent.

The physical moisture absorbent can be a zeolite such as a natural zeolite, an artificial zeolite, or a synthetic zeolite, wherein the synthetic zeolite can be a hydrophilic zeolite or a hydrophobic zeolite, and the hydrophilic zeolite can be, for example, preferably each of molecular sieves 3A, 4A, 5A, and 13X.

The chemical moisture absorbent can be preferably, for example, calcium oxide, magnesium sulfate, silica gel, calcium chloride, quicklime, or aluminum oxide.

### (Moisture-absorbing layer: thermoplastic resin)

The thermoplastic resin can be, for example, any of the polyolefins indicated for the oxygen-absorbing layer.

### (Skin layer for laminate for moisture-absorbing)

The skin layer for laminate for moisture absorption is a layer laminated on at least one surface of the moisture-absorbing layer. The skin layer for moisture-absorbing laminate can be composed of an acyclic olefin polymer and a thermoplastic resin comprising at least one type of barrier resin. The acyclic olefin polymer and the barrier resin can be any of the substances indicated for the oxygen-absorbing film.

Additionally, the skin layer for moisture-absorbing laminate can be any of the skin layers indicated for the oxygen-absorbing film, i.e., can be a skin layer comprising an acyclic olefin polymer and a barrier resin. In such cases, absorption of moisture from the edge face of the moisture absorbent can be further limited.

The water vapor permeability of a 25 µm-thick skin layer for moisture-absorbing laminate at 40 °C and relative humidity of 90 % measured in accordance with JIS K 7129:2008 can be 5 g/m²·day or more, 10 g/m²·day or more, 12 g/m²·day or more, 15 g/m²·day or more, or 20 g/m²·day or more, and 300 g/m²·day or less, 200 g/m²·day or less, 150 g/m²·day or less, 100 g/m²·day or less, or 80 g/m²·day or less.

### (Substrate layer)

The substrate layer can be any of the substrate layers indicated for the laminate for packaging. The substrate layer of the moisture-absorbing laminate can be the same as the substrate layer of the laminate for packaging or different therefrom.

### <Sealant layer>

The sealant layer is any layer for bonding other films via heat sealing.

The sealant layer can be, for example, a polyethylene resin, a polypropylene resin, polyvinyl chloride, polystyrene, a thermoplastic elastomer, or an ionomer resin. Additionally, the sealant layer can be an easy-peeling film.

The commercially-available easy-peeling film can be CMPS®, T.A.F.® (both are Mitsui Chemicals Tohcello, Inc.), Assist AE Series, Assist M Series, Assist P Series (Sumika Plastech Co., Ltd.), Aloma Film (Okamoto Industries, Ltd.), VMX film (J-Film Corporation), or Suntox-CP (Sun Tox Co., Ltd.), etc.

The thickness of the sealant layer is preferably, from the perspective of achieving good heat sealing, 5 µm or more, 7 µm or more, or 10 µm or more, and 30 µm or less, 25 µm or less, or 20 µm or less.

### <<Method for manufacturing oxygen-absorbing film and moisture-absorbing film>>

The oxygen-absorbing film of the present invention can be manufactured by a method comprising a step of preparing an oxygen-absorbing layer resin composition, a step of preparing a skin layer resin composition, a step of forming a film, and a step of laminating.

The preparation of the oxygen-absorbing layer resin composition can be performed by mixing and kneading the aforementioned oxygen-deficient cerium oxide and a polyolefin. Additionally, the preparation of the skin layer resin composition can be performed by mixing and kneading the thermoplastic resin composing the skin layer.

For the mixing and kneading, a batch kneader such as a kneader, a mixing roller, or a conical mixer, a continuous kneader such as a twin screw kneader, a single screw extruder, a two-roll kneader, or a three-roll kneader is used. In this case, the kneading can be carried out at a temperature of 80 °C or more, 100 °C or more, 120 °C or more, or 140 °C or more, and 220 °C or less, 200 °C or less, or 180 °C or less, depending on the material used.

The above kneaded oxygen-absorbing layer resin composition and the skin layer resin composition can be formed in the oxygen-absorbing layer and skin layer respectively, and laminated to obtain the oxygen-absorbing film of the present invention. Extrusion molding such as inflation method, T-die method, casting method, or the like, can be used for the above kneaded oxygen-absorbing layer resin composition and the skin layer resin composition to make single-layer films thereof, thereby performing film forming independently. Alternatively, the film-forming step and the laminating step of the oxygen-absorbing layer and the skin layer can be performed simultaneously by a co-extrusion method such as a multi-layer inflation method, or a T-die method.

In particular, it is preferable to laminate the skin layer directly on the oxygen-absorbing layer, whereby the oxygen absorption of the oxygen-absorbing layer is controlled well. From that perspective, using a co-extrusion method such as multi-layer inflation method, T-die method, or the like, to simultaneously perform the film-forming step and the laminating step of the oxygen-absorbing layer and the skin layer is preferable.

A moisture-absorbing film having a moisture-absorbing layer and a skin layer for moisture-absorbing laminate can be manufactured using a method similar to the above, wherein a moisture absorber and a thermoplastic resin indicated for the moisture-absorbing layer are mixed and kneaded to prepare a moisture-absorbing layer resin composition, a thermoplastic resin indicated for the skin layer for moisture-absorbing laminate is mixed and kneaded to prepare a resin composition for skin layer for moisture-absorbing laminate, and the resin composition for moisture absorption layer and the resin composition for skin layer for moisture-absorbing laminate are used to prepare the moisture-absorbing film.

### <<Method for processing a content >>

The method for processing a content comprises performing a radiation sterilization treatment on the package of the present invention.

As stated above, when using the package of the present invention, the oxygen concentration within the package at 25 °C can be 0.7 to 5.0 vol% for at least 24 hours within 7 days after sealing the content. This oxygen concentration is preferable from the perspective that it both greatly facilitates the radiation sterilization treatment, and allows for a reduction of oxygen concentration after radiation sterilization treatment. Therefore, when using the package of the present invention, it is preferable to perform the radiation sterilization treatment within the period of 1 to 7 days after sealing.

### <Radiation Sterilization Treatment>

The radiation sterilization treatment can be, for example as shown in FIG. 3, performed by irradiating the package (200a, 200b) with radiation (A) from the outside. The radiation can be, for example, gamma rays, or electron beams.

### EXAMPLES

The present invention will be specifically described by way of the Examples and Comparative Examples, but the present invention is not limited thereto.

First, the laminate for packaging was evaluated as indicated below.

### <<Preparing the laminate for packaging >>

### <Examples 1-1>

55 mass parts of oxygen-deficient cerium oxide CeO₂₋ₓ (x=0.5) and 45 mass parts of low density polyethylene were mixed and kneaded using a twin screw extruder in an atmosphere of nitrogen, and extruded into a pellet form, preparing an oxygen-absorbing layer master batch.

For the skin layer, a skin layer composition comprising a dry blend of 90 mass parts of linear low density polyethylene and 10 mass parts of cyclic olefin copolymer (TOPAS® 8007F-600, Polyplastics Co., Ltd.) was used.

The above materials were used to form a film having a structure of skin layer 20 µm / oxygen-absorbing layer 35 µm / skin layer 20 µm at a resin temperature of 180 °C, by co-extrusion forming by a 2-type 3-layer inflation molding machine.

The laminate for packaging of Example 1-1 was prepared by using a dry laminating adhesive to bond the barrier layer of a substrate layer comprising a resin layer (polyethylene terephthalate, thickness 12 µm) and a barrier layer (aluminum foil, thickness 20 µm) to the formed film.

### <Comparative Example 1>

The laminate for packaging of Comparative Example 1-1 was prepared in a manner similar to Example 1-1, except that the skin layer composition did not comprise a cyclic olefin copolymer.

### <Examples 2 to 6>

The laminates for packaging of Examples 1-2 to 1-6 were prepared in a manner similar to Example 1-1, except that the content of linear low density polyethylene and cyclic olefin copolymer in the skin layer composition were altered to the content shown in Table 1.

### <<Measuring oxygen permeability>>

The oxygen permeability in a 20 µm skin layer in the laminates for packaging of Examples 1-1 to 1-6 and Comparative Example 1-1 was measured in accordance with JIS K7126-2 using an oxygen permeability measuring device (OX-TRAN, Mocon, Inc.).

### <<Evaluation>>

### <Oxygen absorption rate>

The prepared laminates for packaging were sealed in aluminum bags each with a volume of 15 mL under low oxygen concentrations (about 3 vol%), and the oxygen concentration inside the bag was measured immediately after sealing, 1 day after sealing, and 7 days after sealing. The measurement was performed by inserting a measurement needle of a diaphragm galvanic battery oxygen sensor (Pack Master, Iijima Electronics, Co.) into the aluminum bag.

Results are shown in Table 1.

**[Table 1]**

| | Configuration | | | | | | Evaluation | | |
|---|---|---|---|---|---|---|---|---|---|
| | Oxygen-absorbing layer (mass%) | Skin layer | | | | | Oxygen concentration (vol%) | | |
| | | Acyclic olefin polymer | | Barrier resin | | Oxygen permeability (cc·20µm/m²·day·atm) | Immediately after sealing | 1 day after | 7 days after |
| | | Type | Content (mass%) | Type | Content (mass%) | | | | |
| Comparative Example 1-1 | LDPE (45) + CeOx (55) | LLDPE | 100 | - | 0 | 7852 | 2.94 | 0.68 | below 0.10 |
| Example 1-1 | | LLDPE | 90 | COC | 10 | 6429 | 3.06 | 0.77 | below 0.10 |
| Example 1-2 | | LLDPE | 80 | COC | 20 | 5263 | 3.06 | 0.82 | below 0.10 |
| Example 1-3 | | LLDPE | 70 | COC | 30 | 4309 | 2.99 | 1.00 | below 0.10 |
| Example 1-4 | | LLDPE | 60 | COC | 40 | 3528 | 2.99 | 1.29 | below 0.10 |
| Example 1-5 | | LLDPE | 30 | COC | 70 | 1936 | 2.99 | 1.82 | 0.14 |
| Example 1-6 | | LLDPE | 10 | COC | 90 | 1298 | 2.99 | 1.97 | 0.20 |

From Table 1, when packaging was done such that the environment had an oxygen concentration of about 3 vol%, the oxygen concentration after 1 day was too low in Comparative Example 1-1, less than 0.7 vol%, though remained not less than 0.7 vol% in Examples 1 to 6. Additionally, it could be confirmed that the oxygen concentration 7 days after sealing in Examples 1-1 to 1-6 was reduced to not more than 0.2 vol%.

Next, the package was evaluated as indicated below.

### <<Preparing the package>>

### <Example 2-1>

### (Preparing the laminate for packaging)

The laminate for packaging was prepared in a manner similar to Example 1-1, except that a skin layer composition comprising a dry blend of 70 mass parts of linear low density polyethylene and 30 mass parts of cyclic olefin polymer (Topas® 8007F-600, Polyplastics) was used as the skin layer, the resin temperature during co-extrusion formation of the oxygen-absorbing layer and the skin layer was set to 170 °C, and low density polyethylene (LDPE) (Suntec LD (L1850K), Asahi Kasei Corporation) for sand laminating was used in place of dry laminating adhesive.

The layer configuration of the laminate for packaging is as follows ("//" refers to sections adhering by dry lamination): skin layer / oxygen-absorbing layer / skin layer / LDPE / barrier layer // resin layer.

### <Preparation of the moisture-absorbing laminate>

55 mass parts of hydrophilic zeolite (molecular sieve 3A, Union Showa K.K.) and 45 mass parts of ethylene-metacrylic acid copolymer (Nucrel 4214C, Dow-Mitsui Polychemicals Co., Ltd.) were mixed and kneaded by a twin screw extruder under an atmosphere of nitrogen, and then extruded into pellets to prepare a moisture-absorbing layer master batch.

A linear low density polyethylene (SP2520, Prime Polymer Co., Ltd.) was used as the skin layer for moisture-absorbing laminate.

The above materials were used to form a film having a skin layer 10 µm / moisture-absorbing layer 30 µm / skin layer 10 µm, by co-extrusion formation by a 2-type 3-layer film inflation molding machine with a resin temperature of 180 °C.

The barrier layer of a substrate layer comprising a resin layer (polyethylene terephthalate, thickness 12 µm) and a barrier layer (aluminum foil, thickness 20 µm) was bonded to the skin layer on one surface of the manufactured film by sand lamination using low density polyethylene (Santec LD (L1850K), Asahi Kasei Corporation).

An easy-peel film (IMX-L, J-Film, thickness 30 µm) as a sealant layer was bonded to the skin layer on the other surface of the manufactured film by sand laminating using low density polyethylene (Santec LD (L1850 K), Asahi Kasei Corporation) to form a moisture-absorbing laminate.

The layer configuration of the moisture-absorbing laminate was as follows: Sealant layer / LDPE / skin layer / moisture-absorbing layer / skin layer / LDPE / barrier layer // resin layer

### (Production of the bag)

Four tetrahedrally-shaped packages of Example 2-1 were produced by cutting the manufactured laminates for packaging and laminates for moisture absorption to the respective established sizes, arranging the skin layers of the laminates for packaging to face the sealant layers of the laminates for moisture absorption, and then heat sealing with an impulse sealer for a sealing time of 1.4 seconds at a sealing width of 10 mm.

Of the four packages made, the one used for the purpose of evaluating edge face deactivation of the moisture-absorbing layer was made using a package in which the laminate for packaging and the moisture-absorbing layer were each cut to a size of 90 mm×90 mm, and the one used for evaluation edge face deactivation of the oxygen-absorbing layer was made using a package in which the laminate for packaging and the moisture-absorbing laminate were each cut to a size of 50 mm×100 mm. The other packages were made as a package in which the laminate for packaging and the moisture-absorbing laminate were each cut to 65 mm×65 mm and then sealed as a tetrapack such that the volume was 15 mL. Additionally, of the 4 packages made, the one used for evaluating moisture absorption sealed a mini humidity data logger.

### <Example 2-2>

Four packages of Example 2-2 were prepared in a manner similar to Example 2-1, except that a skin layer composition comprising a dry blend of 65 mass parts of linear low density polyethylene and 35 mass parts of cyclic olefin polymer (TOPAS® 8007F-600, Polyplastics Co., Ltd.) was used as the skin layer of the laminate for packaging.

### <Comparative Example 2-1>

Four packages of Comparative Example 2-1 were prepared in a manner similar to Example 2-1, except that a linear low density polyethylene was used as the skin layer of the laminate for packaging.

### <Comparative Example 2-2>

Four packages of Comparative Example 2-2 were prepared in a manner similar to Comparative Example 2-1, except that a layer (thickness 40 µm) of linear low density polyethylene was used instead of a moisture-absorbing film of the moisture-absorbing laminate.

### <<Evaluation of the edge face deactivation of the oxygen-absorbing layer>>

Each of the packages made was individually placed in a constant temperature and humidity chamber at a temperature of 40 °C and a relative humidity of 75% RH, and after 30 minutes, the heat sealed portions were torn, and color alterations (navy to cream color) due to oxygen absorption by the oxygen-deficient cerium oxide were checked visually, and deactivation distance was measured.

### <<Evaluation of amount of moisture absorbed from the edge face of the moisture-absorbing layer>>

For each of the packages made, the initial mass was measured, then the packages were individually placed in a constant temperature and humidity chamber at a temperature of 40 °C and a relative humidity of 75%RH, and after 10 days, the mass of the package was measured, and the change in mass was examined.

### <<Evaluation of oxygen absorption>>

One of each type of package made was individually left to sit for 7 days, and the measurements were performed by inserting a measurement needle of a diaphragm galvanic battery oxygen sensor (Pack Master RO-103, Iijima Electronics, Co.) into each package. In Table 2 below, test samples with a oxygen absorption volume of at least 0.03 mL/cm² at the time of measuring were marked with "Y", and the others were marked with "N".

### <<Evaluation of moisture absorption>>

The evaluation of moisture absorption was performed by using the above mini humidity data logger to chronologically measure amount of moisture. In Table 2 below, test samples that were completely dry, i.e., had 0% moisture, at the point when 3 hours passed since the start of measurement were marked with "Y", and the others were marked with "N".

Results are shown in Table 2.

**[Table 2]**

| | Configuration | | | | | | | | Evaluation | | | |
|---|---|---|---|---|---|---|---|---|---|---|---|---|
| | Laminate for packaging | | | | | Laminate for moisture absorbing | | | Edge face deactivation distance of oxygen-absorbing layer (mm/30 days) | Amount of moisture absorbed from edge face of moisture-absorbing layer (mg/10 days) | Oxygen absorbance | Moisture absorbance |
| | Oxygen-absorbing layer | Skin layer | | | | Moisture-absorbing layer | Skin layer | Sealant layer | | | | |
| | | Acyclic olefin polymer | | Barrier resin | | | | | | | | |
| | | Type | Content (%) | Type | Content (%) | | | | | | | |
| Example 2-1 | LDPE (45) + CeOx (55) | LLDPE | 70 | COC | 30 | Zeolite 3A (55) + EMAA (45) | LLDPE | EP FILM | 1.41 | 1.2 | Y | Y |
| Example 2-2 | | LLDPE | 65 | COC | 35 | | LLDPE | EP FILM | 1.36 | 1.2 | Y | Y |
| Comparative Example 2-1 | | LLDPE | 100 | - | 0 | | LLDPE | EP FILM | 1.63 | 1.4 | Y | Y |
| Comparative Example 2-2 | | LLDPE | 100 | - | 0 | - | LLDPE | EP FILM | 2.4 | - | Y | N |

In Table 2, comparing with the edge face deactivation distance of the oxygen-absorbing layer of the packages of Comparative Examples 2-1 and 2-2, the edge face deactivation distance of the oxygen-absorbing layer of the packages of Examples 2-1 and 2-2 are smaller, such that it is clear that packages of Examples 2-1 and 2-2 could limit the edge face deactivation of the oxygen-absorbing layer more than the package of Comparative Example 2-1.

Additionally, in Table 2, comparing to the mass increase of the package of Comparative Example 2-1, it is possible to confirm that the mass increases of the packages in Examples 2-1 and 2-2 were smaller. Considering that there was no significant difference in the oxygen absorption and moisture absorption therebetween, the difference in mass increase was likely due to edge face deactivation of the moisture-absorbing layer. Thus, it can be recognized that moisture absorption from the edge face of the moisture-absorbing layer of the packages in Example 2-1 and Example 2-2 was limited relative to the package in Comparative Example 2-1.

### REFERENCE SIGNS LIST

- 2: oxygen-absorbing layer
- 4: skin layer of oxygen-absorbing film
- 10a, 10a', 10b: oxygen-absorbing film
- 20: substrate layer
- 30: content
- 100a, 100a', 100b: laminate for packaging
- 150: other film
- 200a, 200b, 200c: package
- 300a: moisture-absorbing laminate
- 312: moisture-absorbing layer
- 314: skin layer for moisture-absorbing laminate
- 320: substrate layer for moisture-absorbing laminate
- A: radiation

## Claims

1. An oxygen-absorbing film comprising an oxygen-absorbing layer and a skin layer laminated on at least one surface of the oxygen-absorbing layer,
wherein the oxygen absorbing layer comprises a polyolefin, and oxygen-deficient cerium oxide, and
wherein the skin layer comprises an acyclic olefin polymer and a cyclic olefin polymer.

2. The oxygen-absorbing film according to claim 1, wherein the content of the cyclic olefin polymer in the skin layer is 10 to 90 mass% relative to the total mass of the entire skin layer.

3. The oxygen-absorbing film according to claim 2, wherein the content of the cyclic olefin polymer in the skin layer is 10 to 40 mass% relative to the total mass of the entire skin layer.

4. The oxygen-absorbing film according to any one of claims 1 to 3, wherein the cyclic olefin polymer is an α-olefin-cyclic olefin copolymer.

5. The oxygen-absorbing film according to any one of claims 1 to 4, wherein the skin layer is directly laminated on the oxygen-absorbing layer.

6. The oxygen-absorbing film according to any one of claims 1 to 5, wherein the oxygen permeability of a thermoplastic resin composing the skin layer, measured in accordance with JIS K 7126-2, is 1000 to 6500 cc·20 µm/m²·day·atm.

7. A laminate for packaging comprising
a substrate layer, and
the oxygen-absorbing film according to any one of claims 1 to 6 laminated on the substrate layer,
wherein the skin layer of the oxygen-absorbing film is positioned on the opposite side from the substrate layer.

8. A package comprising
the laminate for packaging according to claim 7, and
a content sealed by the laminate for packaging,
wherein the skin layer of the laminate for packaging is positioned on the side with the content.

9. A package, comprising
a laminate for packaging comprising a substrate layer, an oxygen-absorbing layer, and a skin layer in that order, and
a content sealed by the laminate for packaging,
wherein the skin layer of the laminate for packaging is positioned on the side with the content,
wherein the oxygen-absorbing layer comprises a polyolefin and an oxygen-deficient cerium oxide, and
wherein the oxygen permeability of a thermoplastic resin constituting the skin layer, measured in accordance with JIS K 7126-2, is 1000 to 6500 cc·20 µm/m²·day·atm.

10. A package, comprising
a laminate for packaging, comprising a substrate layer, an oxygen-absorbing layer, and a skin layer in that order, and
a content sealed by the laminate for packaging,
wherein the skin layer of the laminate for packaging is positioned on the side with the content,
wherein the oxygen-absorbing layer comprises a polyolefin and oxygen-deficient cerium oxide, and
wherein the skin layer comprises an acyclic olefin polymer and a barrier resin such that, at 25 °C, the oxygen concentration inside the package is 0.7 to 5.0 vol% for at least 24 hours within 7 days after the sealing of the content, and is 0.2 vol% or less after 7 days from the sealing of the content.

11. The packages according to any one of claims 8 to 10, further comprising
a moisture-absorbing laminate, comprising a substrate layer, a moisture absorption layer, and a skin layer for moisture-absorbing laminate in this order,
wherein a peripheral edge of the laminate for packaging and the peripheral edge of the moisture-absorbing laminate are facing each other and fused together, thereby sealing the content.

12. The package according to claim 11, wherein at least one of the laminate for packaging and the moisture-absorbing laminate further comprises a sealant layer on the side with the content.

13. The package according to any one of claims 8 to 12, wherein the content is a medical instrument.

14. A method for processing the content, in which radiation sterilization treatment is performed on the package according to any one of claims 8 to 13.

15. The method for processing the content according to claim 14, wherein the radiation sterilization treatment is performed within the period of 1 to 7 days after sealing
